# DEMANDE DE BREVET EUROPEEN

(11) **EP 1 416 669 A2**
(43) Date de publication de la demande: **06.05.2004**
(21) Numéro de dépôt: 03292544.8
(22) Date de dépôt: 14.10.2003
(51) Int. Cl.: H04L 12/24

(54) **Dispositif et procédé de contrôle de données de gestion d'équipements de réseau**

(30) Priorité: 04.11.2002 FR 0213737
(71) Demandeur: ALCATEL, 75008 Paris (FR)
(72) Inventeur: Chevanne, Michel, 92140 Clamart (FR); Drugmand, Philippe, 92260 Fontenay aux roses (FR); Bergeot, Patrick, 92160 Antony (FR)
(74) Mandataire: Sciaux, Edmond

(57) **Abrégé**

Un dispositif (1) est dédié au contrôle de données de gestion d'équipements (5) d'un réseau de communications comportant un système de gestion de réseau permettant de gérer les équipements (5) du réseau à partir de modules de données de gestion chargés, associés auxdits équipements et stockés dans une mémoire (9). Ce dispositif (1) comprend des moyens de contrôle (10) capables, lorsque le système effectue une demande de prise en charge d'au moins un nouvel équipement (5), d'extraire de la mémoire (9) le module de données de gestion qui est associé à chaque nouvel équipement, puis de charger dans le système chaque nouveau module de données de gestion extrait, de façon dynamique, de sorte que la gestion, par le système, des autres équipements du réseau ne soit pas interrompue.

## Description

L'invention concerne le domaine de la gestion d'équipements d'un réseau de communications, et plus particulièrement celui du contrôle de l'intégration de nouveaux équipements de réseau ou de nouvelles versions d'équipements de réseau par un système de gestion de réseau.

La plupart des réseaux de communications sont équipés d'outils couplés à un système de gestion de réseau (ou NMS pour « Network Management System »), également appelé système d'exploitation du réseau, permettant à leur gestionnaire (ou superviseur) de gérer les équipements qui les constituent. De tels outils mettent généralement en oeuvre des fonctions et des services, également appelés OAM&P (pour « Operations, Administration, Maintenance and Provisioning »).

Un tel système de gestion de réseau est par exemple connu de la demande de brevet EP 0946020, au nom de la société NTT.

On entend ici par « équipement de réseau» tout type de matériel, comme par exemple des serveurs, des terminaux, des commutateurs, des routeurs ou des concentrateurs, capable d'échanger des données selon un protocole de gestion de réseau avec le système de gestion NMS, comme par exemple le protocole SNMP (pour « Simple Network Management Protocol » RFC 2571-2580).

Lorsqu'un nouvel équipement (ou nouveau type d'équipement) est mis sur le marché, il doit disposer d'un module de données de gestion, également appelé application de gestion, afin de pouvoir être intégré dans un réseau et géré par son gestionnaire. L'intégration consiste alors à charger dans un serveur du NMS le « nouveau » module de données de gestion associé à ce nouvel équipement. On entend ici par « nouvel équipement », aussi bien un équipement existant modifié (par exemple par le remplacement ou l'ajout d'une carte) qu'un équipement d'un nouveau type.

Or, pour effectuer un tel chargement, il faut préalablement supprimer « l'ancien » module de données de gestion utilisé par le NMS pour gérer l'ancien équipement, puis relancer l'application de configuration de l'ensemble du réseau. Ce mode de chargement présente au moins deux inconvénients. Tout d'abord, pendant toute la durée de ces opérations, les équipements du réseau ne peuvent plus être gérés par le NMS. Ensuite, le chargement d'un nouveau module de données de gestion ne garantit pas sa compatibilité avec les autres modules de données de gestion associés aux autres équipements gérés par le NMS. Par conséquent, en cas d'incompatibilité, il peut arriver que le nouvel équipement ne puisse pas se synchroniser avec le NMS, ce qui en interdit la gestion. Le superviseur (ou gestionnaire) du réseau doit alors interrompre la gestion du réseau pour éviter que des alarmes intempestives ne parviennent au NMS.

L'invention a donc pour but de remédier à tout ou partie des inconvénients précités.

Elle propose à cet effet un dispositif de contrôle de données de gestion d'équipements d'un réseau de communications équipé d'un système de gestion de réseau (NMS) capable de gérer les équipements de réseau à partir de modules de données de gestion préalablement chargés, associés aux équipements de réseau et stockés dans une mémoire.

Ce dispositif se caractérise par le fait qu'il comprend des moyens de contrôle capables, lorsque le NMS effectue une demande de prise en charge d'au moins un nouvel équipement, d'extraire de la mémoire le module de données de gestion qui est associé à chaque nouvel équipement, puis de charger dans le NMS chaque nouveau module de données de gestion extrait, de façon dynamique, de sorte que la gestion, par le NMS, des autres équipements du réseau ne soit pas interrompue.

Selon une autre caractéristique de l'invention, les moyens de contrôle peuvent être agencés, chaque fois qu'est chargé un nouveau module de données de gestion, associé à une nouvelle version d'un équipement qui n'a pas encore été intégrée dans le réseau alors qu'un « ancien » module de données de gestion associé à une version antérieure de cet équipement est encore chargé et que la version antérieure est toujours intégrée au réseau, tout d'abord pour mettre en attente le nouveau module de données de gestion venant d'être chargé de manière à poursuivre la gestion de l'ancienne version de l'équipement à partir de l'ancien module associé et chargé, jusqu'à l'intégration de la nouvelle version de l'équipement. Ensuite, lorsque les moyens de contrôle reçoivent des données signalant l'intégration de la nouvelle version, ils peuvent mettre en service le nouveau module de données de gestion précédemment chargé de manière à assurer la gestion de la nouvelle version de l'équipement à partir de celui-ci.

Dans ce cas, il est préférable que la mise en attente consiste, d'une part, à permettre la gestion de la nouvelle version de l'équipement à partir du nouveau module de données de gestion associé, sans tenir compte des éventuels messages d'erreur liés à sa non intégration au sein du réseau, et d'autre part, à adresser à l'ancien module de données de gestion un message lui signalant qu'un changement de version est en cours et qu'il ne doit pas tenir compte d'une partie au moins des messages d'erreur liés à la gestion conjointe des ancienne et nouvelle versions.

Par ailleurs, et toujours dans le cas présenté ci-dessus, il peut être avantageux que les moyens de contrôle soient capables de supprimer (ou décharger) l'ancien module de données de gestion une fois qu'ils ont été avertis de la synchronisation entre la nouvelle version d'équipement et le nouveau module de données de gestion.

En outre, les moyens de contrôle sont préférentiellement agencés de manière à charger des modules de données de gestion selon au moins un premier mode dans lequel les modules sont chargés indépendamment d'éventuelles dépendances entre eux et un second mode dans lequel les modules sont chargés en tenant compte d'éventuelles dépendances entre eux.

Préférentiellement, chaque module de données de gestion est constitué d'au moins un descripteur. Par définition, un descripteur est un module informatique qui contient toutes les données nécessaires à la gestion par le NMS d'au moins un élément d'équipement (comme par exemple une carte à circuits intégrés ou une interface de connexion).

Préférentiellement, un descripteur est dédié à un équipement et constitué, d'une part, de fichiers de codes de programmes, de préférence en langage Java (en raison de son aptitude à charger et décharger des codes de façon dynamique), dont un premier ensemble de fichiers permettant de mettre en oeuvre une interface d'équipement, un deuxième fichier comportant des premières données désignant le type de l'équipement, et un troisième fichier comportant des secondes données désignant la définition de MIB associée à cet équipement, et d'autre part, d'au moins un fichier de configuration, par exemple de type XML et contenant des informations permettant de gérer un type d'équipements du réseau.

L'invention porte également sur un serveur de gestion de réseau de communications équipé d'un dispositif de contrôle du type de celui présenté ci-avant et de moyens de gestion capables de gérer des équipements de réseau à partir de modules de gestion préalablement chargés, associés aux équipements de réseau et stockés dans une mémoire.

L'invention porte en outre sur un procédé de contrôle de données de gestion d'équipements d'un réseau de communications, dans lequel on gère les équipements de réseau à partir de modules de données de gestion chargés, associés à ces équipements de réseau.

Ce procédé se caractérise par le fait qu'il consiste, en cas de demande de prise en charge d'au moins un nouvel équipement du réseau, à charger de façon dynamique chaque nouveau module de données de gestion associé à un nouvel équipement, de sorte que la gestion des autres équipements du réseau ne soit pas interrompue.

Le procédé selon l'invention pourra comporter des caractéristiques complémentaires qui pourront être prises séparément et/ou en combinaison, et en particulier :
- en cas de chargement d'un nouveau module de données de gestion associé à une nouvelle version d'un équipement qui n'a pas encore été intégrée dans le réseau alors qu'un « ancien » module de données de gestion, associé à une version antérieure de cet équipement, est encore chargé et que cette version antérieure est toujours intégrée au réseau, il est avantageux de commencer par mettre en attente le nouveau module de données de gestion qui vient d'être chargé de manière à poursuivre la gestion de l'ancienne version de l'équipement à partir de l'ancien module associé et chargé, jusqu'à l'intégration de la nouvelle version de l'équipement, puis de mettre en service le nouveau module chargé lorsque l'on reçoit des données signalant l'intégration de la nouvelle version, de sorte que la gestion de la nouvelle version de l'équipement soit assurée à partir de ce nouveau module de données de gestion ;
- la mise en attente peut consister, d'une part, à permettre la gestion de la nouvelle version de l'équipement à partir du nouveau module de données de gestion associé, sans tenir compte d'éventuels messages d'erreur liés à sa non intégration dans le réseau, et d'autre part, à adresser à l'ancien module de données de gestion un message lui signalant qu'un changement de version est en cours et qu'il ne doit pas tenir compte d'une partie au moins des messages d'erreur liés à la gestion conjointe des ancienne et nouvelle versions ;
- en cas de synchronisation entre la nouvelle version d'équipement et le nouveau module de données de gestion, on peut supprimer l'ancien module de données de gestion ;
- on peut charger les modules de données de gestion indépendamment de leurs éventuelles dépendances ou en tenant compte de leurs éventuelles dépendances;
- les modules de données de gestion peuvent être chacun constitués d'au moins un descripteur du type de ceux présentés ci-avant.

L'invention peut notamment être mise en oeuvre dans toutes les technologies réseaux qui doivent être gérées, et notamment dans les réseaux de transmission (par exemple de type WDM, SONET, SDH), de données (par exemple de type Internet-IP ou ATM) ou de voix (par exemple de type classique, mobile ou NGN).

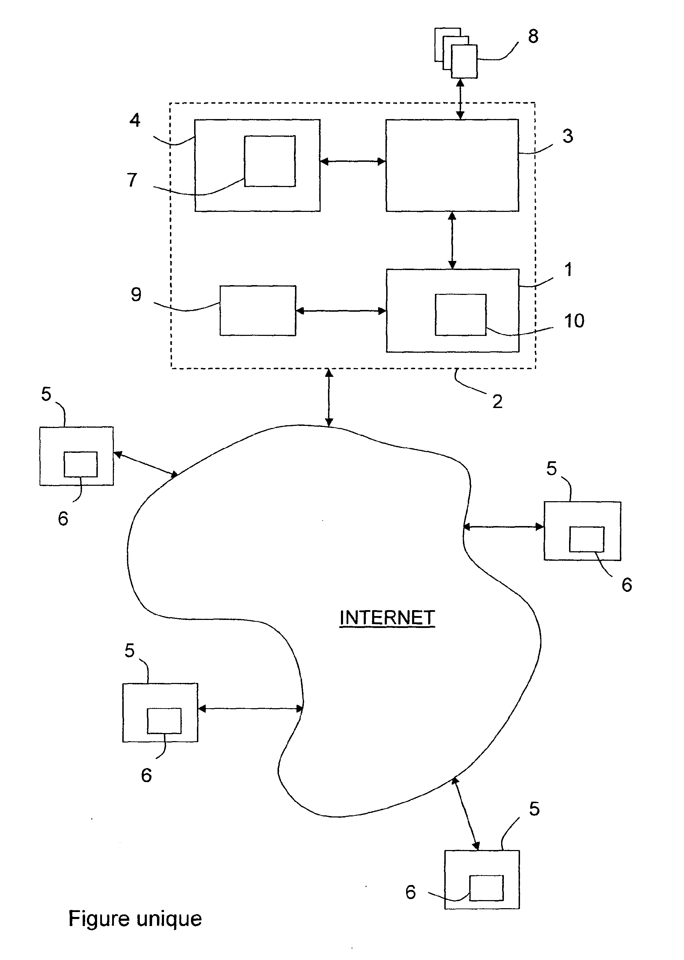

D'autres caractéristiques et avantages de l'invention apparaîtront à l'examen de la description détaillée ci-après, et de l'unique figure annexée qui illustre de façon schématique un exemple de réseau de communications équipé d'un dispositif de contrôle selon l'invention implanté dans un serveur de gestion de réseau. Cette figure pourra non seulement servir à compléter l'invention, mais aussi contribuer à sa définition, le cas échéant.

L'invention propose un dispositif de contrôle destiné à permettre au gestionnaire (ou superviseur) d'un réseau de communications, via son système de gestion du réseau (ou NMS pour « Network Management System »), d'accéder rapidement aux données de gestion des équipements du réseau qu'il souhaite gérer et/ou configurer.

Sur l'unique figure se trouve illustré, à titre d'exemple, un réseau de communications équipé d'un dispositif de contrôle 1 selon l'invention. Plus précisément, dans cet exemple, le dispositif 1 est implanté dans un serveur de gestion 2 du système de gestion du réseau NMS, qui comporte en outre un module de gestion 3, couplé au dispositif 1 et à une interface graphique 4 de type GUI (pour « Graphical User Interface »).

Bien entendu, le dispositif de contrôle 1 pourrait être implanté dans un boîtier externe dédié, couplé au serveur de gestion 2, ou bien dans le module de gestion 3 dudit serveur de gestion 2. Par ailleurs, dans l'exemple illustré, on n'a représenté qu'un unique serveur de gestion 2, mais, on peut envisager que le NMS comporte plusieurs serveurs de gestion, chacun équipé d'un dispositif de gestion 1, et par exemple destinés à permettre chacun la gestion d'une partie des équipements du réseau.

Comme illustré, le réseau de communications comporte une multiplicité d'équipements de réseau 5 (ici au nombre de quatre, à titre d'exemple), tels que des serveurs périphériques ou de coeur, des terminaux, des commutateurs ou des routeurs, capables d'échanger des données, selon un protocole de gestion de réseau choisi, avec le NMS et notamment avec son serveur de gestion 2.

Par exemple, le réseau de communications est de type Internet (IP) et le protocole de gestion du réseau est le protocole SNMP (pour « Simple Network Management Protocol » RFC 2571-2580). Mais, bien entendu, l'invention s'applique à d'autres types de réseau, comme par exemple aux réseaux de transmission de type WDM, SONET ou SDH, de données de type ATM, ou de voix de type classique, mobile ou NGN, et à d'autres protocoles de gestion de réseau, comme par exemple TL1, CORBA ou CMISE/CMIP.

Par ailleurs, chaque équipement 5 comporte classiquement une base d'informations de gestion 6 (ou MIB pour « Management Information Base »), également appelée base d'instances d'objets. Chaque MIB 6 comporte des champs d'information dont les valeurs spécifiques caractérisent l'équipement associé et peuvent être accédées par un navigateur 7, généralement implanté dans l'interface graphique 4. Par ailleurs, chaque MIB 6 est associée à une définition de base d'informations de gestion 8, également appelée définition de MIB, stockée dans le NMS et accessible au serveur de gestion 2, et notamment à son module de gestion 3. Une définition de MIB 8 répond par exemple au standard RFC 1213, dans le cas du protocole SNMP, et décrit généralement, pour l'équipement 5 concerné, tous ses attributs possibles, un type de données (string, integer, ...), l'organisation de nommage, le texte décrivant l'équipement (ou objet), les droits d'accès, la hiérarchie des objets (ou équipements), et analogue.

En outre, on prévoit une mémoire 9 couplée au moins au dispositif de contrôle 1 et dans laquelle sont stockées des modules de données de gestion dédiés à chaque équipement 5 du réseau et préférentiellement agencés sous la forme de ce que l'homme de l'art appelle des descripteurs. Un descripteur est un module informatique qui contient toutes les données nécessaires à la gestion par le NMS d'au moins un élément d'équipement (comme par exemple une carte à circuits intégrés ou une interface de connexion).

Chaque descripteur dédié est préférentiellement constitué d'au moins un premier fichier de codes de programmes, de préférence en langage Java, qui permet de mettre en oeuvre une interface d'équipement 5, un deuxième fichier contenant des données qui désignent un type d'équipement, et un troisième fichier contenant des données qui désignent la définition de MIB 8 associée à l'équipement du type considéré, et d'au moins un fichier de configuration, par exemple de type XML, qui contient des informations permettant de gérer un type d'équipement 5 du réseau.

Les fichiers de codes de programmes sont préférentiellement en langage Java, en raison de l'aptitude de ce langage à charger et décharger de façon dynamique des codes informatiques. Mais, d'autres langages peuvent être envisagés, comme par exemple Small Talk, dès lors qu'ils permettent le chargement et le déchargement dynamique de codes informatiques.

Dans le cas du langage Java, les fichiers de codes sont également appelés « classes ». Chaque descripteur est donc associé à une classe principale qui possède éventuellement certaines dépendances avec d'autres classes. Par exemple un descripteur A peut être conçu de manière à fonctionner avec une version particulière CA de la classe principale C, tandis qu'un descripteur B peut être conçu de manière à fonctionner avec une version particulière CB de cette classe principale C.

Dans l'exemple illustré, la mémoire 9 est implantée dans le serveur de gestion 2. Mais, elle pourrait être implantée dans le dispositif de contrôle 1 de l'invention, ou dans le module de gestion 3 du serveur 2, ou encore dans un boîtier externe dédié, couplé au moins au dispositif de contrôle 1.

Le dispositif de contrôle 1 comporte un module de contrôle 10 agencé de manière à extraire de la mémoire 9 chaque descripteur dédié à un équipement 5 que le serveur de gestion 2 du NMS souhaite prendre en charge, puis à charger ce descripteur dédié extrait dans le module de gestion 3 du serveur 2. Plus précisément, selon l'invention, le module de contrôle 10 est capable de charger les descripteurs, de façon dynamique, dans le module de gestion 3 de sorte qu'il puisse continuer à gérer les autres équipements du réseau sans être interrompu (et perturbé) par l'opération de chargement.

Lorsqu'un descripteur est chargé dans le module de gestion 3, et que l'équipement 5 auquel il est dédié s'est synchronisé à lui, via le réseau, le serveur de gestion 2, dans lequel il est implanté, est alors capable de communiquer avec ledit équipement 5. Du fait de l'architecture utilisée, de type « client/serveur », le serveur de gestion 2 utilise généralement plusieurs stratégies pour maintenir synchronisées les informations associées aux différents équipements 5 qu'il gère. Il peut par exemple stocker les MIB 6 des équipements 5 dans une mémoire cache et/ou dans un disque dur, ou transmettre toutes les requêtes aux équipements 5, ou encore interroger régulièrement (« polling ») les équipements 5, ou encore écouter toutes les notifications qui lui parviennent du réseau.

Les données (ou codes) que comprennent les descripteurs et qui sont chargées (ou « plug in ») dans le module de gestion 3 permettent non seulement la gestion des équipements, mais également l'affichage de certaines au moins des informations relatives aux équipements 5 sur un moniteur couplé au serveur de gestion 2, grâce à l'interface graphique 4 de type GUI.

De façon classique, la gestion d'un équipement 5 au niveau du module de contrôle 3 s'effectue à l'aide de deux types de commandes. Un premier type concerne les commandes de création qui permettent de configurer chaque équipement 5 avec les données qui lui sont spécifiques, comme par exemple son type, sa version, son adresse, et analogues. Ces données sont stockées dans une mémoire dédiée à cet effet. Lors du lancement (ou démarrage) du système de gestion, cette mémoire est accédée pour permettre le chargement des descripteurs et des définitions de MIB appropriés. Un second type concerne les commandes de supervision qui permettent au module de gestion 3 de synchroniser ses données avec celles des équipements 5.

Plusieurs dizaines de descripteurs, typiquement jusqu'à cinquante environ, peuvent ainsi être chargés dans le module de gestion 3 et dans l'interface graphique 4, via le module de gestion 3.

Le dispositif 1 selon l'invention est par ailleurs préférentiellement agencé de manière à gérer la coexistence au sein du module de gestion 3 d'un ancien et d'un nouveau descripteurs associés à un même type d'équipement 5. En effet, avant d'intégrer dans un réseau un nouvel équipement ou une nouvelle version d'un équipement, on charge dans le module de gestion 3 le nouveau descripteur qui lui est dédié. Ce nouveau descripteur, dédié, par exemple, à la nouvelle version d'un équipement, coexiste donc dans le module de gestion 3 avec l'ancien descripteur dédié à la version (dite ancienne) de cet équipement, laquelle est toujours intégrée dans le réseau, contrairement à la nouvelle.

Pour éviter que cette coexistence ne perturbe la gestion effectuée par le module de gestion 3, notamment en raison d'alarmes signalant l'absence de la nouvelle version, le module de contrôle 10 est agencé de manière à placer dans un état « d'attente » (ou « stand-by ») chaque nouveau descripteur qu'il vient de charger jusqu'à l'intégration de la nouvelle version de l'équipement associé. De la sorte, le module de gestion 3 peut continuer à gérer l'ancienne version de l'équipement à partir de l'ancien descripteur associé et chargé tant qu'il demeure intégré au réseau. Ensuite, lorsque le module de contrôle 10 est averti par le module de gestion 3 que la nouvelle version de l'équipement a bien été intégrée au réseau, il place le nouveau module dans l'état « actif » et l'ancien descripteur dans l'état « inactif ». Le nouveau descripteur est alors en service et le module de gestion 3 peut assurer la gestion de la nouvelle version de l'équipement à partir de celui-ci.

L'intégration est considérée comme définitive lorsque le module de gestion 3 est assuré que les données (et informations) relatives au nouvel équipement 5 sont effectivement synchronisées avec les descripteurs dédiés aux différents équipements du réseau. Il peut en effet arriver qu'une nouvelle version d'équipement (ou un nouvel équipement) ne soit pas compatible avec le système de gestion du réseau. Dans cette situation, l'invention permet donc de s'assurer qu'un équipement est effectivement intégré au réseau avant d'en assurer la gestion conjointement avec celle des autres équipements du réseau.

Dans ce mode de réalisation du dispositif de contrôle 1, il est par ailleurs préférable que le placement, par le module de contrôle 10, d'un nouveau descripteur dans l'état d'attente consiste, d'une part, à faire croire au module de gestion 3 que la nouvelle version de l'équipement 5 a bien été intégrée, et qu'il doit le gérer à partir du nouveau descripteur chargé sans tenir compte des éventuels messages d'erreur liés à sa non intégration effective au sein du réseau, et d'autre part, à adresser à l'ancien descripteur un message lui signalant qu'un changement de version est en cours et qu'il ne doit pas tenir compte d'une partie au moins des messages d'erreur liés à la coexistence des ancienne et nouvelle versions. Ainsi, tant que les données d'un nouvel équipement n'ont pas été effectivement synchronisées, le module de gestion 3 assure sa supervision, via le nouveau descripteur associé, selon un mode dit « esclave », par opposition à un mode dit « maître » désignant la supervision de l'ancienne version encore synchronisée via l'ancien descripteur.

Un tel mode de fonctionnement permet de réduire notablement le temps nécessaire à l'intégration de chaque nouvel équipement au sein d'un réseau.

Par ailleurs, lorsqu'un ancien descripteur a été placé dans l'état inactif, et donc que la nouvelle version de l'équipement a été considérée comme effectivement intégrée au réseau (ses données étant synchronisées), il est préférable que le module de contrôle 10 le décharge du module de gestion 3. Ce déchargement peut consister en une suppression.

Comme indiqué précédemment, le langage Java est particulièrement intéressant dans le cadre de la mise en oeuvre de l'invention, et notamment de la gestion de la coexistence d'ancien et nouveau modules de données de gestion (ou descripteurs). En effet, ce langage offre une fonctionnalité appelée chargement de classe (ou « classloader ») qui selon sa déclinaison permet d'isoler ou de ne pas isoler des classes associées à des descripteurs différents selon que l'on souhaite tenir compte ou non de leurs éventuelles dépendances respectives. Grâce à cette fonctionnalité, il est donc possible de ne charger qu'une fois une classe principale C pour tous les descripteurs (de manière à tenir compte des dépendances de ses sous-classes) ou de charger des sous-classes CA et CB, par exemple, de manière à ne pas tenir compte de leurs dépendances éventuelles (ce qui est avantageux lorsque certaines dépendances sont incompatibles).

Le module de contrôle 10 est donc agencé de manière à fonctionner selon ces deux modes de chargement, en fonction du choix du superviseur.

Il est important de noter que ce mode de chargement n'est pas exclusif au langage Java. D'autres langages l'utilisent, comme par exemple C#.

Le module de gestion 3, le dispositif de gestion 1 (et notamment son module de contrôle 10), ainsi qu'éventuellement la mémoire 3, peuvent être réalisés sous la forme de circuits électroniques (ou « hardware »), de modules logiciels ou informatiques (ou « software »), ou d'une combinaison de circuits et de logiciels.

L'invention offre également un procédé de contrôle de données de gestion d'équipements 5 d'un réseau de communications, dans lequel on gère les équipements 5 de réseau à partir de modules de données de gestion chargés, associés à ces équipements de réseau.

Celui-ci peut être mis en oeuvre à l'aide du dispositif de contrôle 1 présenté ci-avant. Les fonctions principales et les sous-fonctions optionnelles assurées par les étapes de ce procédé étant sensiblement identiques à celles assurées par les différents moyens constituant le dispositif de contrôle 1, seules seront résumées ci-après les étapes mettant en oeuvre les fonctions principales du procédé selon l'invention.

Ce procédé se caractérise par le fait qu'il consiste, en cas de demande de prise en charge d'au moins un nouvel équipement 5 du réseau, à charger de façon dynamique chaque nouveau module de données de gestion (ou descripteur) associé à un nouvel équipement 5, de sorte que la gestion des autres équipements du réseau ne soit pas interrompue.

Préférentiellement, en cas de chargement d'un nouveau module de données de gestion associé à une nouvelle version d'un équipement 5 qui n'a pas encore été intégrée dans le réseau alors qu'un « ancien » module de données de gestion, associé à une version antérieure de cet équipement, est encore chargé et que cette version antérieure est toujours intégrée au réseau, il est avantageux de commencer par mettre en attente le nouveau module de données de gestion qui vient d'être chargé de manière à poursuivre la gestion de l'ancienne version de l'équipement à partir de l'ancien module associé et chargé, jusqu'à l'intégration de la nouvelle version de l'équipement, puis de mettre en service le nouveau module chargé lorsque l'on reçoit des données signalant l'intégration de la nouvelle version, de sorte que la gestion de la nouvelle version de l'équipement soit assurée à partir de ce nouveau module de données de gestion

L'invention ne se limite pas aux modes de réalisation de procédé, dispositif de contrôle 1 et serveur de gestion 2 décrits ci-avant, seulement à titre d'exemple, mais elle englobe toutes les variantes que pourra envisager l'homme de l'art dans le cadre des revendications ci-après.

Ainsi, on a décrit un réseau dans lequel le système de gestion NMS ne comportait qu'un unique serveur de gestion équipé du dispositif de contrôle selon l'invention et agencé de manière à gérer l'ensemble des équipements du réseau. Mais, le système de gestion NMS pourrait comporter plusieurs serveurs de gestion équipés chacun d'un dispositif de contrôle selon l'invention et agencés de manière à permettre la gestion de parties d'équipements du réseau.

## Revendications

1. Dispositif (1) de contrôle de données de gestion d'équipements (5) d'un réseau de communications comportant un système de gestion de réseau propre à gérer lesdits équipements à partir de modules de données de gestion chargés, associés auxdits équipements et stockés dans une mémoire (9), **caractérisé en ce qu'**il comprend des moyens de contrôle (10) agencés, en cas de demande de prise en charge par ledit système d'au moins un nouvel équipement (5) dudit réseau, pour extraire de ladite mémoire (9) le module de données de gestion associé à chaque nouvel équipement, puis à charger dans ledit système chaque nouveau module de données de gestion extrait, de façon dynamique, de sorte que la gestion des autres équipements (5) dudit réseau par ledit système ne soit pas interrompue.

2. Dispositif selon la revendication 1, **caractérisé en ce que** lesdits moyens de contrôle (10) sont agencés, en cas de chargement d'un nouveau module de données de gestion associé à une nouvelle version d'un équipement (5), pas encore intégrée dans ledit réseau, alors qu'un « ancien » module de données de gestion associé à une version antérieure de cet équipement (5) est encore chargé et que ladite version antérieure est toujours intégrée audit réseau, i) pour mettre en attente ledit nouveau module de données de gestion chargé de manière à poursuivre la gestion de ladite ancienne version de l'équipement à partir dudit ancien module associé et chargé, jusqu'à l'intégration de ladite nouvelle version de l'équipement (5), puis ii), à réception de données signalant l'intégration de ladite nouvelle version, pour mettre en service ledit nouveau module chargé de manière à assurer la gestion de la nouvelle version de l'équipement (5) à partir de ce nouveau module de données de gestion.

3. Dispositif selon la revendication 2, **caractérisé en ce que** ladite mise en attente consiste, d'une part, à permettre la gestion de la nouvelle version de l'équipement (5) à partir dudit nouveau module de données de gestion associé, sans tenir compte de messages d'erreur liés à sa non intégration dans ledit réseau, et d'autre part, à adresser audit ancien module de données de gestion un message lui signalant qu'un changement de version est en cours et qu'il ne doit pas tenir compte d'une partie au moins des messages d'erreur liés à la gestion conjointe desdites ancienne et nouvelle versions.

4. Dispositif selon l'une des revendications 2 et 3, **caractérisé en ce que** lesdits moyens de contrôle (10) sont agencés, en cas de synchronisation entre ladite nouvelle version d'équipement (5) et ledit nouveau module de données de gestion, pour supprimer ledit ancien module de données de gestion.

5. Dispositif selon l'une des revendications 1 à 4, **caractérisé en ce que** lesdits moyens de contrôle (10) sont agencés pour charger des modules de données de gestion selon au moins un premier mode dans lequel lesdits modules sont chargés indépendamment d'éventuelles dépendances entre eux et un second mode dans lequel lesdits modules sont chargés en tenant compte d'éventuelles dépendances entre eux.

6. Dispositif selon l'une des revendications 1 à 5, **caractérisé en ce que** chaque module de données de gestion est constitué d'au moins un descripteur.

7. Dispositif selon la revendication 6, **caractérisé en ce que** chaque descripteur est constitué d'au moins un fichier de codes de programme et d'au moins un fichier de configuration.

8. Dispositif selon la revendication 7, **caractérisé en ce que** l'un desdits fichiers de codes de programme d'un descripteur comporte des premières données désignant un type auquel appartient un équipement de réseau, et un autre desdits fichiers de codes de programme dudit descripteur comporte des secondes données désignant une définition de base d'informations de gestion associée audit équipement (5) et accessible audit système.

9. Dispositif selon l'une des revendications 7 et 8, **caractérisé en ce que** lesdits codes de programme sont en langage Java.

10. Serveur (2) de gestion d'un réseau de communications, comprenant des moyens de gestion (3) propres à gérer des équipements (5) de réseau à partir de modules de données de gestion chargés, associés auxdits équipements (5) de réseau et stockés dans une mémoire (9), **caractérisé en ce qu'**il comprend un dispositif de gestion (1) selon l'une des revendications précédentes, couplés auxdits moyens de gestion.

11. Procédé de contrôle de données de gestion d'équipements (5) d'un réseau de communications, dans lequel on gère lesdits équipements de réseau à partir de modules de données de gestion chargés, associés auxdits équipements (5) de réseau, **caractérisé en ce qu'**en cas de demande de prise en charge d'au moins un nouvel équipement (5) dudit réseau, on charge de façon dynamique chaque nouveau module de données de gestion associé à un nouvel équipement (5), de sorte que la gestion des autres équipements (5) dudit réseau ne soit pas interrompue.

12. Procédé selon la revendication 11, **caractérisé en ce qu'**en cas de chargement d'un nouveau module de données de gestion associé à une nouvelle version d'un équipement (5), pas encore intégrée dans ledit réseau, alors qu'un « ancien » module de données de gestion associé à une version antérieure de cet équipement (5) est encore chargé et que ladite version antérieure est toujours intégrée audit réseau, i) on met en attente ledit nouveau module de données de gestion chargé de manière à poursuivre la gestion de ladite ancienne version de l'équipement (5) à partir dudit ancien module associé et chargé, jusqu'à l'intégration de ladite nouvelle version de l'équipement (5), puis ii), à réception de données signalant l'intégration de ladite nouvelle version, on met en service ledit nouveau module de données de gestion chargé de manière à assurer la gestion de la nouvelle version de l'équipement (5) à partir de ce nouveau module de données de gestion.

13. Procédé selon la revendication 12, **caractérisé en ce que** ladite mise en attente consiste, d'une part, à permettre la gestion de la nouvelle version de l'équipement (5) à partir dudit nouveau module de données de gestion associé, sans tenir compte de messages d'erreur liés à sa non intégration dans ledit réseau, et d'autre part, à adresser audit ancien module de données de gestion un message lui signalant qu'un changement de version est en cours et qu'il ne doit pas tenir compte d'une partie au moins des messages d'erreur liés à la gestion conjointe desdites ancienne et nouvelle versions.

14. Procédé selon l'une des revendications 12 et 13, **caractérisé en ce qu'**en cas de synchronisation entre ladite nouvelle version d'équipement (5) et ledit nouveau module de données de gestion, on supprime ledit ancien module de données de gestion.

15. Procédé selon l'une des revendications 11 à 14, **caractérisé en ce que** les modules de données de gestion sont chargés indépendamment de leurs éventuelles dépendances ou en tenant compte de leurs éventuelles dépendances.

16. Procédé selon l'une des revendications 12 à 15, **caractérisé en ce que** chaque module de données de gestion est constitué d'au moins un descripteur.

17. Procédé selon la revendication 16, **caractérisé en ce que** chaque descripteur est constitué d'au moins un fichier de codes de programme et d'au moins un fichier de configuration.

18. Procédé selon la revendication 17, **caractérisé en ce que** l'un désdits fichiers de codes de programme d'un descripteur comporte des premières données désignant un type auquel appartient un équipement de réseau, et un autre desdits fichiers de codes de programme dudit descripteur comporte des secondes données désignant une définition de base d'informations de gestion associée audit équipement (5) et accessible.

19. Procédé selon l'une des revendications 17 et 18, **caractérisé en ce que** lesdits codes de programme sont en langage Java

20. Utilisation des procédé, dispositif de contrôle (1) et serveur de gestion (2) selon l'une des revendications précédentes dans les technologies réseaux devant être gérées.

21. Utilisation selon la revendication 20, **caractérisé en ce que** lesdites technologies réseaux sont choisies dans un groupe comprenant les réseaux de transmission, en particulier de type WDM, SONET et SDH, de données, en particulier de type Internet-IP et ATM, et de voix, en particulier de type classique, mobile et NGN.
